# EUROPEAN PATENT SPECIFICATION

(11) **EP 0 853 219 B1**
(45) Date of publication and mention of the grant of the patent: **26.05.2004**
(21) Application number: 97309199.4
(22) Date of filing: 14.11.1997
(51) Int. Cl.: F25B 17/08

(54) **Fluid chilling apparatus**
Kühlgerät für ein Fluidum
Appareil de refroidissement de fluide

(30) Priority: 08.01.1997 GB 9700238; 07.08.1997 GB 9716752; 04.09.1997 GB 9718815
(43) Date of publication of application: 15.07.1998
(73) Proprietor: The BOC Group plc, Windlesham Surrey GU20 6HJ (GB)
(72) Inventor: Garrett, Michael Ernest, Woking, Surrey, GU22 7XR (GB); Shervington, Evelyn Arthur, Near Petersfield, Hampshire, GH31 5LD (GB)
(74) Representative: MacLean, Martin David

(56) References cited:
- CA-A- 2 180 322
- FR-A- 982 202
- FR-A- 2 719 367
- GB-A- 2 126 705
- US-A- 3 597 937
- US-A- 4 147 808
- US-A- 4 367 079
- US-A- 5 088 302
- US-A- 5 111 668
- US-A- 5 165 247
- US-A- 5 431 716

## Description

This invention relates to an apparatus for chilling fluids, particularly but not exclusively canned or bottled beverages. More particularly, the present invention is directed towards a fluid chilling apparatus of the type in which the temperature reduction caused by the desorption of a gas from an adsorbent is used to chill a beverage.

A fluid chilling apparatus of such a type is disclosed in Canadian patent specification CA 2180322 A and its European equivalent patent application EP 0752564 A. These disclose chilling a quantity of fluid by employing an adsorbent for receiving and adsorbing gas under pressure, means for sealing adsorbed gas in the adsorbent and means for releasing adsorbed gas from the adsorbent in a controlled manner such that the action of desorption causes a reduction in the temperature of the adsorbent and adsorbate which acts to cool the fluid.

United States patent US 4367079 A discloses a unit containing sorbent material for use as a thermal accumulator in a heat storage or refrigeration system operating under low pressure. The sorbent may for example be in the form of a powder or crystals enclosed in thin flexible casing comprising two trough-shaped flanged parts joined by such means as heat sealing.

There is a requirement for a chilling apparatus for chilling canned or bottled beverages which necessitates no more than minimal changes to existing beverage containers. Major manufacturers also require a chilling apparatus which does not necessitate major changes to existing production lines.

It is an object of the present invention to address these requirements.

Accordingly, the present invention provides a chiller for chilling a quantity of fluid of the type comprising an adsorbent for receiving and adsorbing under pressure a quantity of gas and in which the desorption of gas from the adsorption causes a reduction in temperature of the adsorbent and adsorbate which acts to chill the fluid, wherein the chiller comprises at least one vessel for placement in direct thermal contact with the fluid to be chilled, characterised in that the or each vessel comprises two thin resiliently deformable sheets of substantially similar size and shape, joined together around the peripheral edges thereof so as to form a cavity therebetween for containing the adsorbent and additionally joined together at one or more other points, and the said points are aligned so as to form crease lines (C) about which the vessel(s) may be folded.

Such an arrangement is easily introduced into beverage containers without requiring the design of those containers or of the production lines therefor to be changed substantially. Such chillers are also simple, inexpensive and easy to fabricate. In addition, such chiller vessels have a large surface area in relation to their volume, and this optimises their chilling efficiency in relation to their volume.

Consequently, the volume of such a chiller vessel can be minimised, so that it does not displace any greater volume of beverage than is strictly necessary to achieve the desired chilling effect.

The sheets, which may be planar, are resiliently deformable in order that the chiller vessel can be inserted through the neck of a bottle or the dispensing aperture of a beverage can.

The sheets may suitably be made of aluminium or an alloy thereof, which sheets can be easily welded together along their peripheral edges. Alternatively, the vessel may comprise a layer of phenolic resin glass coating applied so as to surround the adsorbent.

The sheets forming the chiller vessel are also joined together, by spot welding, for example, at one or more points other than around their peripheral edges. Such an arrangement provides not only a stronger chiller vessel construction but also an increase in surface area. Moreover, these additional joining points are aligned so as to form crease lines about which the chiller vessel may be folded, so as to facilitate insertion of the apparatus into a beverage container.

Preferably, the chiller comprises one or more elongate tubes, the or each tube communicating at one end with the vessel cavity and the adsorbent therein, thereby to create a passageway for adsorbed gas to pass through as it is released from the adsorbent. The or each elongate tube allows heat transfer from the beverage or other fluid to the gas flowing along its length, which is suitably substantially longer than the maximum dimension of the vessel; this latter feature enables the elongate tube(s) to be wound around a resiliently deformable vessel so as to hold it in a tightly-squeezed configuration for easy insertion into a beverage container, and/or to be disposed in the container so as to pass from the distal part thereof (ie from the point furthest from the dispensing aperture) to the dispensing aperture, thus passing through, and chilling, a significant proportion of the fluid therein.

To maximise the chilling effect, thermally-conductive fins may be provided, extending from one or both of the sheets forming the chiller vessel.

It is known that most adsorbents are poor conductors of thermal energy. As a result, the chilling of a typical amount of a beverage can be slow, often unacceptably so for a thirsty person, due to poor heat transfer to the adsorbent in the centre of the body of adsorbent contained in the chiller.

Accordingly, the present invention also provides a chiller further comprising heat transfer means of thermally-conductive material in direct thermal contact with the adsorbent and adapted to transfer heat between the vessel walls and the adsorbent therein.

With such an arrangement the heat transfer means can speed up the transfer of heat into the centre of a body of adsorbent so as more effectively to exploit the effect of the temperature reduction caused by desorption of gas therefrom, and therefore provide more rapid chilling of a given quantity of fluid.

Suitably, the adsorbent is in particulate form, particulate activated carbon for example, which is packed, or compressed, so as to minimise the volume occupied by the adsorbent so far as is consistent with maintaining a substantially porous structure to allow ready desorption of gas (carbon dioxide in the case where the adsorbent is activated carbon) from the adsorbent in the inner regions of the body of adsorbent.

Where the adsorbent is particulate, the heat transfer means is preferably also in particulate form, the heat transfer particles being of substantially different average size to the average size of the adsorbent particles. Such a composition is particularly advantageous because, where the heat transfer particles are substantially larger than the adsorbent particles, the heat transfer particles pack together in an array and the adsorbent particles fit into the interstices between adjacent heat transfer particles. In this way, a compact, porous structure can be created in which there is a plurality of effective heat transfer paths between the body of adsorbent and the outer surface thereof. Suitably, the heat transfer particles are substantially evenly dispersed through the adsorbent, so as to create a largely homogenous body of adsorbent and heat transfer particles, and are formed of aluminium or an alloy thereof.

Additionally or alternatively, the heat transfer means may comprise a resilient sheet of thermally-conductive material sized, configured and disposed so as, when placed within the thin-walled vessel, to be contiguous with the walls of the vessel over at least a part of its surface area. With such an arrangement, the sheet provides a good heat transfer path between the outer walls of the vessel containing the adsorbent and the interior of the adsorbent.

In a particularly simple and inexpensive embodiment, the chiller is in the general shape of a cylinder and the resilient sheet adopts the substantial form of a letter "S" when placed therein.

Additionally or alternatively, the heat transfer means may comprise a heat conducting fin arrangement, formed of thermally-conductive material, sited, configured and disposed so as, when placed within the thin-walled vessel, to be in contact with the walls of the vessel. Such a fin arrangement can be configured to sub-divide the interior of the chiller into separate compartments for containing the adsorbent.

In order to complete the desorption process, (there usually being a considerable amount of adsorbed gas remaining when the adsorbent has been reduced to atmospheric pressure), or to accelerate it, the chiller may comprise a vessel containing a gas which is preferentially adsorbed by the adsorbent compared to the "cooling" gas (helium, Xenon or hydrogen are adsorbed by activated carbon in preference to carbon dioxide, for example, so that the use of helium as a flushing gas lowers the partial pressure of carbon-dioxide in the spaces surrounding the adsorbent, thereby inducing more carbon dioxide to desorb thus providing further cooling), the arrangement being such that, preferably towards the end of the desorption process, the preferentially - adsorbed gas is released and is adsorbed by the adsorbent, which consequently desorbs the "cooling" gas.

The quantity of heat involved can be quite considerable and may provide one third as much cooling as was provided by reducing the pressure of the adsorbent to atmospheric. Such an arrangement not only enables full use of the main cooling gas (the preferentially - adsorbed gas preferably having a lower heat of adsorption than the main "cooling" gas, so that the exothermic adsorption heat is more than matched by the heat required by the endothermic desorption process) but also can be used to accelerate the main desorption process, and hence accelerate cooling of the fluid.

The present invention also encompasses a fluid storage container when provided with a chiller as described above.

The present invention will now be described by way of example and with reference to the accompanying drawings, in which:
Figure 1 is a diagrammatic view of a first embodiment of a chiller in accordance with the present invention;
Figure 1a is a side elevation view of the chiller of Figure 1;
Figure 2 is a diagrammatic view of a second embodiment of a chiller in accordance with the invention;
Figures 3a, 3b and 3c are diagrammatic views of a third embodiment of a chiller in accordance with the invention;
Figure 4 is a schematic cross section view of a fourth embodiment of a chiller in accordance with the invention;
Figure 5 is a schematic cross section view of a fifth embodiment of a chiller in accordance with the invention;
Figure 6a and 6b are schematic cross-sectional plan cut oblique views of an optional fin arrangement for a chiller in accordance with the invention; and
Figure 7 is a schematic view of a chiller incorporating gas flushing means for additional cooling.

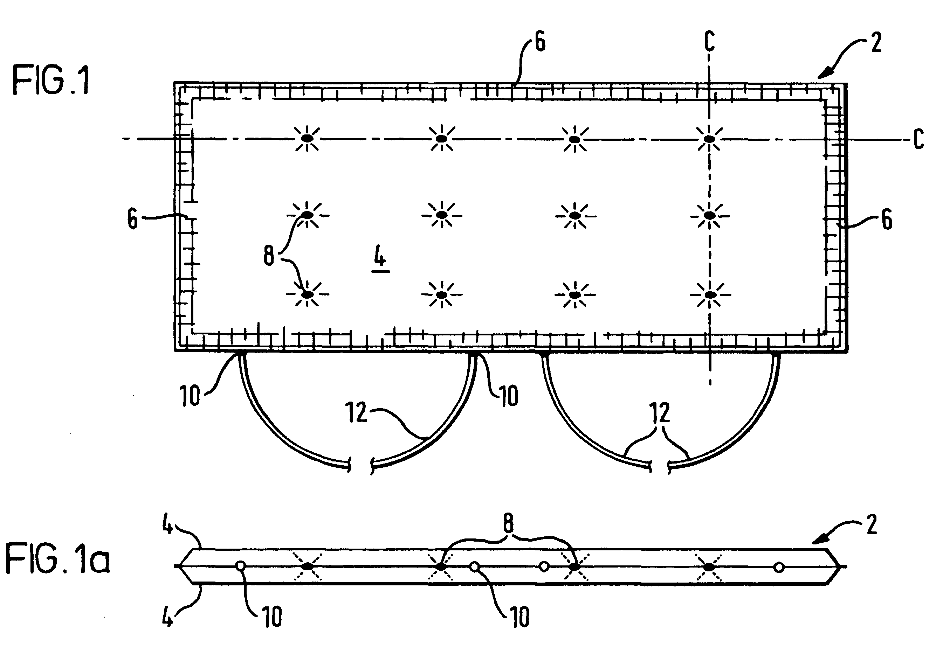

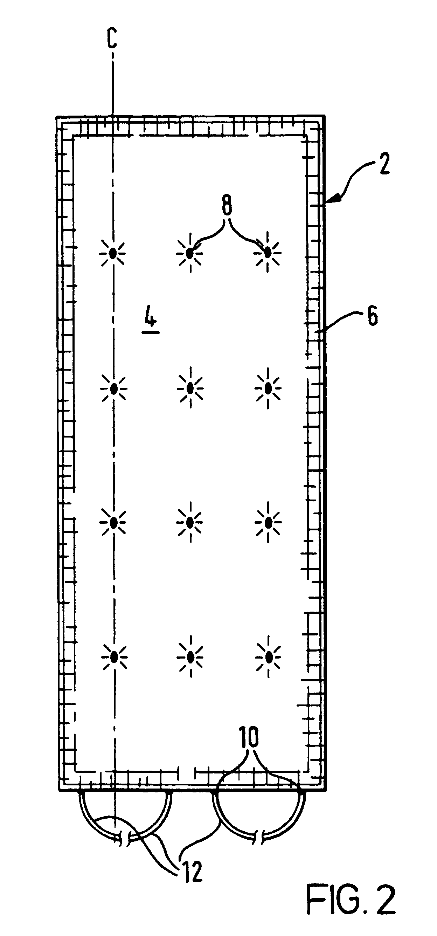

The chillers shown in Figures 1 and 2 comprise thin-walled vessels 2 for containing a suitable adsorbent, such as activated carbon, which receives and adsorbs a gas such as carbon dioxide. The chilling operation, which is not a feature of the present invention per se, is as follows: the chilling vessel 2 containing the adsorbent together with adsorbed gas is installed in a pressurised fluid storage container, which is then sealed; on opening the container, the pressure in the container (usually about 10bar) is released, the drop in pressure triggering the desorption of the gas from the adsorbent. The desorbed gas is released to atmospheric pressure, the endothermic desorption process causing a significant drop in temperature of both the adsorbent and of the desorbed gas, which act to chill the fluid.

The chiller vessels 2 of Figures 1 and 2, which are for installation inside a fluid storage container (not shown) and in direct thermal contact with the fluid to be chilled, are formed of two thin rectangular sheets 4 of aluminium or aluminium alloy which are welded together along their peripheral edges 6. In addition, spot welds 8 are provided, joining the two sheets 4 together to create a "mattress" type configuration. This type of construction not only strengthens the vessel 2 but also provides an increase in surface area in the area adjacent each spot weld 8.

The configuration of the vessel 2 shown in Figures 1 and 2 advantageously combines a large surface area with the minimum volume required to contain sufficient adsorbent to give the desired chilling effect and freely to permit cooling gas adsorption and desorption. Minimising the volume of the vessel 2 is important, so as not to displace too much fluid from the storage container within which it is to be placed. Maximising the surface area of the vessel 2 is important, so as to optimise chilling efficiency and to reduce the time taken to chill the fluid by the desired amount. Furthermore, increasing the surface area allows the vessel 2 to extend over as large a vertical distance as possible within the fluid storage container, so that when the fluid storage container is opened (which would normally then be in a position with the dispensing aperture uppermost), the downward current of fluid cooled by conduction from the upper portion of the vessel is maximised, thereby contributing to greater chilling efficiency.

The disposition of the spot welds 8 is such that they create crease lines C about which the vessel 2 can be folded, in Z-fold or concertina fashion for example, for ease of insertion of the vessel 2 into a fluid storage container (not shown), for example through the dispensing aperture thereof. The thin sheets 4 are sufficiently resilient as to tend to "open out" the folded vessel 2 after insertion, which improves the flow thereabout of fluid to be chilled and can suffice to hold, or wedge, the chiller vessel 2 in position within the fluid storage container.

Along one edge 6 of the chiller vessel 2 are a number of outlets 10 connected to elongate tubes 12. Gas released from the adsorbent within the vessel 2 leaves the vessel 2 via the outlets 10 and passes through the elongate tubes 12, and as it does so, chills the fluid. The elongate tubes 12 terminate at or adjacent the dispensing aperture (not shown) of the fluid storage container, and open to atmosphere on opening of the container for dispensing.

The elongate tubes 12 are sufficiently long as to extend through a substantial part of the fluid in the storage container, so as to maximise the chilling effect of the desorbed gas passing therethrough. Preferably the elongate tubes 12 are sufficiently long as to permit the chiller vessel 2 to be installed in the storage container with the outlets 10 as far away from the container dispensing aperture (not shown) as possible.

Advantageously, the elongate tubes 12 are also long enough to be wrapped around the chiller vessel 2, thus temporarily holding the creased or folded vessel 2 tightly together as it is inserted within the storage container, whereafter the resilience of the thin sheets 4 acts so as to unfold or expand the vessel 2, thus holding it in place in the storage container and/or preventing it undesirably from passing through and/or obstructing the dispensing aperture during the dispensing operation.

The vessels 2 shown in Figures 1 and 2 are equally applicable for use with canned or bottled beverages. The vessel 2 of Figure 1 would preferably be folded about the crease lines C running parallel to its shorter side, or curled up in a spiral about an axis parallel thereto, for insertion into a fluid storage container through the dispensing aperture thereof with the edge along which the outlets 10 are disposed foremost so that once installed that edge is most distant from the dispensing aperture. The vessel 2 of Figure 2 is preferably folded about the crease lines C. or curled up in a spiral about an axis, parallel to the longer side of the vessel 2 for insertion into a fluid storage container.

The chiller described above provides numerous advantages: it is simple and easy to manufacture. It is easily insertable into existing fluid storage containers, even through quite small apertures thereinto, and requires no changes to the designs of standard containers simply to permit insertion. Accordingly, the insertion of such chillers may be achieved without significant changes to existing production lines, at the point immediately prior to the filling of the containers with fluid, for example, The shape and configuration of the chiller also ensures that it is quick and efficient in use.

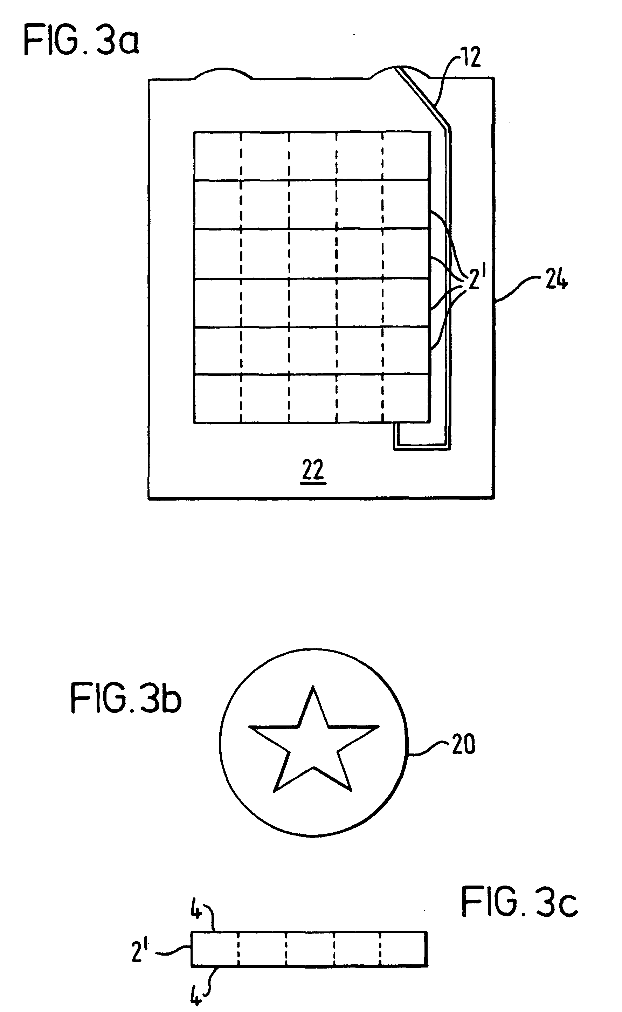

Having described two specific embodiments in accordance with this aspect of the present invention, those skilled in the art will appreciate that the invention encompasses several variations thereof. The chiller shown in Figure 3a, for example, comprises a stack of chiller vessels 2' each of similar size and shape and each containing a similarly shaped and sized 'cake' of activated carbon adsorbent 20 (see Figure 3b) each having a star-shaped central cut out. The chiller vessels 2' comprise discs of thin aluminium sheet 4 which are joined about their periphery so as to form a cylindrical vessel 2', the sheets 4 forming a heat conducting path between the adsorbent 20 and the fluid 22 in the container 24. Alternatively, a stack of adsorbent "cakes" can be contained in a single cylindrical vessel; in such an arrangement the upper and/or lower surface of each cake is grooved to permit free movement of desorbed gas toward the cylindrical wall of the vessel. Preferably the cylindrical surface of each adsorbent "cake" is milled to allow easy passage of gas along the cylindrical vessel wall, and thus enhance heat transfer and the chilling efficiency.

The thin sheets 4 need not be rectangular as shown in Figure 1 and Figure 2; they could instead by of any shape suitable to form any shape of vessel as appropriate for a particular application. The thin sheets could therefore be circular, cylindrical (ie forming a vessel in the shape of an open-ended cylinder) or any other shape. The present invention is not restricted to chillers comprising planar sheets 4 as drawn, and the word "sheets" should be construed accordingly. For example, the vessel may be formed by depositing a phenolic resin glass coating directly onto the adsorbent, which is of any suitable shape (eg as shown in Figures 3a to 3c). The number and disposition of outlets 10 need not be as shown in the drawings, since in some applications it may be desirable to provide only a single outlet and to provide a slow chill, as opposed to the faster chill allowed by multiple outlets, for example. The thin sheets 4, although conveniently of aluminium or aluminium alloy, may be formed of other materials and, as stated earlier, the present invention is particularly suited to cooling canned or bottled beverages but is not limited thereto. Thus, not only is the chiller of the present invention capable of chilling fluids other than beverages, and indeed substances other than fluids (solid or semi-solid foodstuffs, for example, or pharmaceuticals, chemicals or the like), it is also suitable with minimal modification for providing a heating effect (as those skilled in the art will readily appreciate). In light of the foregoing, the word "fluid" as used in the Claims should be construed accordingly.

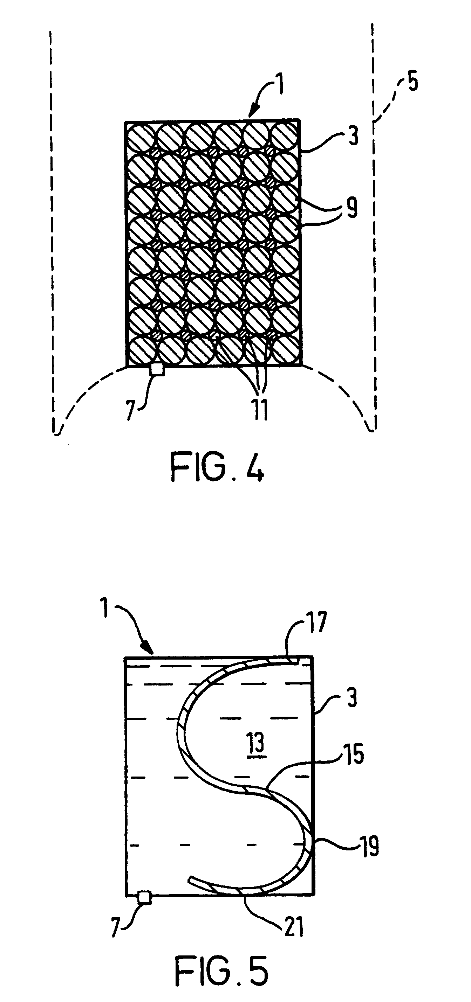

Figure 4 shows a chiller 1 comprising a thin-walled, cylindrical vessel 3 formed of aluminium disposed within a typical beverage can shown, particularly, in phantom 5. The chiller 1 has a gas release valve 7 to allow gas to desorb from the adsorbent within the vessel 3 to produce the chilling effect. The thin walled vessel 3 contains particles of adsorbent 9, such as activated carbon, with substantially smaller particles of aluminium or aluminium alloy 11 interposed in the interstices between adjacent adsorbent particles 9 (for clarity, the sizes of the particles have been exaggerated, and the particles have been represented as substantially spherical). The carbon and aluminium particles 9, 11 are packed together so as to provide both a plurality of good heat transfer paths between the walls of the vessel 3 and the adsorbent in the middle thereof whilst maintaining a sufficiently porous structure as to allow desorption of gas therefrom.

The chiller 1' illustrated in Figure 5 also comprises a thin-walled vessel 3 having a gas release means 7 and containing a suitable adsorbent 13. In this embodiment, a resilient sheet of aluminium alloy 15 is packed into the vessel 3 so as to deform in a spring-like manner, here shown in the shape of a letter "S". Sheet, or spring 15 provides a heat transfer path between the adsorbent 13 in the central regions of the vessel 3 and the walls of the vessel 3, particularly at those regions where there is contact therebetween (17, 19, 21).

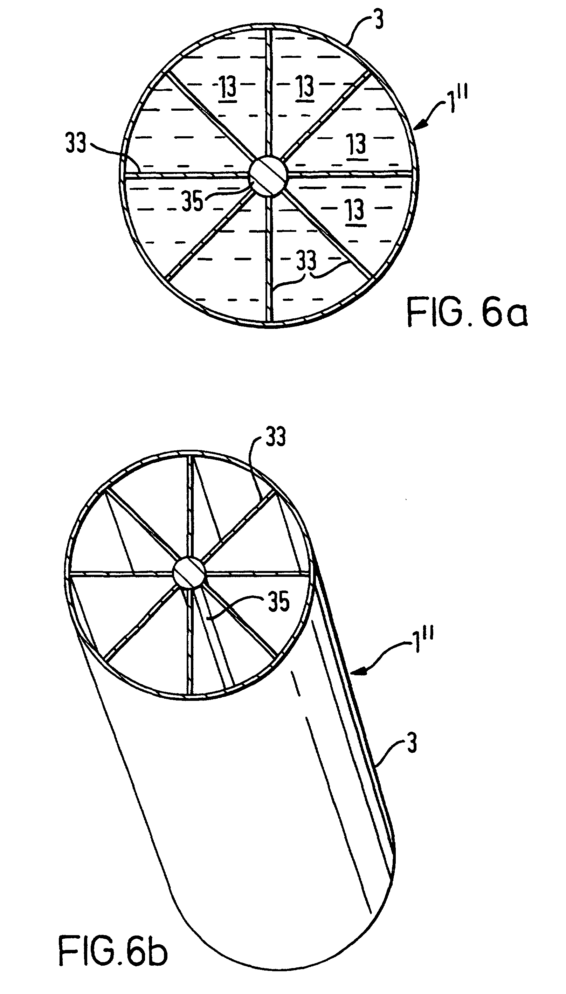

The chiller 1" shown in Figures 6a and 6b also comprises a thin-walled vessel 3 which is sub-divided by a number of fins 33 into a number of separate compartments, each containing adsorbent 13 (the number and disposition of the fins are a matter of straightforward design matters, and can be other than as illustrated). The fins 33 are each in contact with the walls of the vessel 3, and in at least thermal contact with each other along axis 35. As will be appreciated, Figure 6 illustrates an essentially cylindrical chiller 1" (Figure 6a being a plan view) and those skilled in the art will know that this could easily be formed by extrusion of aluminium or an alloy thereof, and would provide an inexpensive and thermally-efficient chiller, once cut into lengths, filled with adsorbent, the ends closed and suitable gas release means provided for selectively releasing an adsorbed gas.

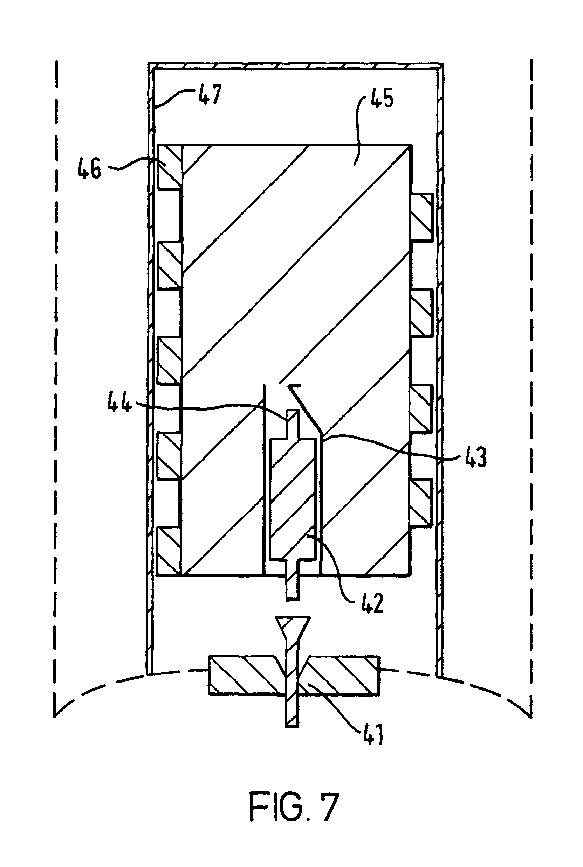

Figure 7 shows a chiller 47 forming part of a beverage can (shown in phantom), in which actuation of a valve 41 at the base of the can pushes a cylinder 42 containing helium under pressure upwards, the cylinder 42 being located in a tube 43, the top of which is bent over to one side. The helium cylinder 42 has a frangible neck portion 44 adapted to snap off when brought into contact with the bent bit of the tube 43. Fracture of the neck portion 44 causes helium to be released into the activated carbon adsorbent 45, thereby causing the desorption of carbon dioxide. Blocks 46 represent a threaded extremity to the block of adsorbent, to make good thermal contact with the walls of the chiller 3 and to increase the gas path.

It will be apparent to those skilled in the art that the embodiments illustrated in Figures 4 to 7 are but illustrative of the general concepts of the present invention, namely of providing heat transfer means so as to transfer heat between the surface and the inner regions of the adsorbent within the chiller and of providing flushing means to promote further and/or accelerated desorption of the cooling gas, and that the simple embodiments described and illustrated above could be used either singly or in any combination. Furthermore, the chiller may be adapted to fit releasably within a specially shaped recess in a beverage container (ie not in direct thermal contact with the fluid) so that two or more such chillers may be used in succession to chill the beverage; accordingly it is not in fact essential that the vessel be adapted for placement in direct thermal contact with the fluid, rather this is a preferred feature.

## Claims

1. A chiller for chilling a quantity of fluid comprising an adsorbent for receiving and adsorbing under pressure a quantity of gas and in which the desorption of gas from the adsorbent causes a reduction in temperature of the adsorbent and adsorbate which acts to chill the fluid, wherein the chiller comprises at least one vessel (2) for placement in thermal contact with the fluid to be chilled, **characterised in that** the or each vessel (2) comprises two thin resiliently deformable sheets (4) of substantially similar size and shape, joined together around the peripheral edges thereof so as to form a cavity therebetween for containing the adsorbent and additionally joined together at one or more other points (8), and the said points (8) are aligned so as to form crease lines (C) about which the vessel(s) (2) may be folded.

2. A chiller as claimed in claim 1 wherein the sheets (4) are made of aluminium or an alloy thereof.

3. A chiller as claimed in Claim 1 or Claim 2, wherein the sheets (4) are welded together along the peripheral edges thereof.

4. A chiller as claimed in any preceding Claim comprising one or more elongate tubes (12), the or each tube (12) communicating at one end with the vessel cavity and the adsorbent therein, thereby to create a passageway for adsorbed gas to pass through as it is released from the adsorbent.

5. A chiller as claimed in Claim 4 wherein the or each elongate tube (12) is substantially longer than the maximum dimension of the vessel (2).

6. A chiller as claimed in any preceding Claim comprising one or more thermally-conductive fins (33) extending outwardly from at least one of the sheets.

7. A chiller as claimed in any preceding Claim comprising a plurality of vessels (2) arranged in a stack.

8. A chiller as claimed in Claim 7 wherein each vessel (2) is of similar size and/or configuration and shape.

9. A chiller as claimed in any preceding Claim comprising heat transfer means (11) of thermally-conductive material in direct thermal contact with the adsorbent (9) and adapted to transfer heat between the vessel walls and the adsorbent (9) therein.

10. A chiller as claimed in Claim 9 wherein the adsorbent (9) is in compressed particulate form.

11. A chiller as claimed in Claim 10 wherein the heat transfer means (11) is in particulate form, the heat transfer particles (11) being of substantially different average size to the adsorbent particles (9).

12. A chiller as claimed in Claim 11 wherein the heat transfer particles (11) are substantially evenly dispersed through the adsorbent (9).

13. A chiller as claimed in any preceding Claim wherein the vessel (2) is adapted for placement in direct thermal contact with the fluid to be chilled.

14. A chiller as claimed in any preceding Claim which comprises means (42) for releasing a second gas into the adsorbent, the second gas being more preferentially adsorbed by the adsorbent than the first gas, thereby to accelerate and/or complete the desorption of the first gas.

15. A chiller as claimed in Claim 14 wherein the first and second gases and the adsorbent are such that the specific heat of desorption of the first gas is not less than the specific heat of adsorption of the second gas.

16. A fluid container containing a chiller as claimed in any preceding Claim.

## Patentansprüche

1. Kühler zum Kühlen eines Flüssigkeitsquantums, mit einem Adsorptionsmittel zur Aufnahme und zum Adsorbieren einer Gasmenge unter Druck, wobei die Desorption von Gas aus dem Adsorptionsmittel eine Absenkung der Temperatur des Adsoprtionsmittels und des Adsorbats bewirkt, was zum Kühlen der Flüssigkeit dient, wobei der Kühler mindestens einen in Wärmekontakt mit der zu kühlenden Flüssigkeit zu setzenden Behälter (2) aufweist, **dadurch gekennzeichnet, daß** der oder jeder Behälter (2) zwei dünne, elastisch verformbare Folien (4) mit im wesentlichen gleicher Größe und Form aufweist, die längs ihrer Umfangsränder miteinander verbunden sind, so daß sie zwischen sich einen Hohlraum zur Aufnahme des Adsorptionsmittels bilden, und die zusätzlich an einer oder mehreren sonstigen Stellen (8) miteinander verbunden sind und diese Stellen (8) so ausgerichtet sind, daß sie Knicklinien (C) bilden, um welche der bzw. die Behälter (2) gefaltet werden können.

2. Kühler nach Anspruch 1, wobei die Folien (4) aus Aluminium oder einer Leggierung hiervon hergestellt sind.

3. Kühler nach Anspruch 1 oder 2, wobei die Folien (4) längs ihrer Umfangsränder miteinander verschweißt sind.

4. Kühler nach einem der vorhergehenden Ansprüche, mit einem oder mehreren länglichen Rohren (12), wobei das oder jedes Rohr (12) mit einem Ende mit dem Behälterhohlraum und dem darin befindlichen Adsorptionsmittel in Verbindung steht, um einen Kanal zum Durchtritt von adsorbierten Gas zu schaffen, wenn dieses aus dem Adsorptionsmittel freigesetzt wird.

5. Kühler nach Anspruch 4, wobei das oder jedes längliche Rohr (12) beträchtlich länger als die maximale Abmessung des Behälters (2) ist.

6. Kühler nach einem der vorhergehenden Ansprüche, mit einer oder mehreren wärmeleitenden Rippen (33), die von mindestens einer der Folien nach außen wegragen.

7. Kühler nach einem der vorhergehenden Ansprüche, mit einer Mehrzahl von in einem Stapel angeordneten Behältern (2).

8. Kühler nach Anspruch 7, wobei jeder Behälter (2) von gleicher Größe und/oder Konfiguration und Form ist.

9. Kühler nach einem der vorhergehenden Ansprüche, mit Wärmeübertragungsmitteln (11) aus wärmeleitfähigem Material in direktem Wärmekontakt mit dem Adsorptionsmittel (9), die so ausgelegt sind, daß sie Wärme zwischen den Behälterwänden und dem darin befindlichen Adsorptionsmittel (9) übertragen.

10. Kühler nach Anspruch 9, wobei das Adsorptionsmittel (9) in gepresster Teilchenform vorliegt.

11. Kühler nach Anspruch 10, wobei die Wärmeübertragungsmittel (11) in Teilchenform vorliegen, wobei die Wärmeübertragungsteilchen (11) von wesentlich verschiedener mittlerer Größe als die Adsorptionsmittelteilchen (9) sind.

12. Kühler nach Anspruch 11, wobei die Wärmeübertragungsteilchen (11) im wesentlichen gleichmäßig in dem Adsorptionsmittel (9) verteilt sind.

13. Kühler nach einem der vorhergehenden Ansprüche, wobei der Behälter (2) zum Platzieren in direktem Wärmekontakt mit der zu kühlenden Flüssigkeit ausgelegt ist.

14. Kühler nach einem der vorhergehenden Ansprüche, der Mittel (42) zum Freisetzen eines zweiten Gases in das Adsorptionsmittel aufweist, wobei das zweite Gas von dem Adsorptionsmittel mehr bevorzugt adsorbiert wird als das erste Gas, wodurch die Desorption des ersten Gases beschleunigt und/oder vervollständigt wird.

15. Kühler nach Anspruch 14, wobei das erste und das zweite Gas und das Adsorptionsmittel derart sind, daß die spezifische Desorptionswärme des ersten Gases nicht kleiner als die spezifische Adsorptionswärme des zweiten Gases ist.

16. Flüssigkeitsbehälter mit einem Kühler nach einem der vorhergehenden Ansprüche.

## Revendications

1. Dispositif de refroidissement pour refroidir un volume de fluide, comprenant un adsorbant destiné à recevoir et adsorber sous pression un volume de gaz et dans lequel la désorption du gaz hors de l'adsorbant provoque une diminution de la température de l'adsorbant et de l'adsorbat, laquelle sert à refroidir le fluide, l'appareil de refroidissement comprenant au moins un récipient (2) pour un placement en contact thermique avec le fluide à refroidir, ***caractérisé en ce que*** le ou chaque récipient (2) comprend deux minces feuilles (4) élastiquement déformables, substantiellement de taille et de forme similaires, réunies l'une à l'autre sur leurs bordures périphériques de manière à former entre elles une cavité pour recevoir l'adsorbant et additionnellement réunies l'une à l'autre par un ou plusieurs autres points (8), et lesdits points (8) sont alignés de manière à former des lignes de pliure (C) autour desquelles le(s) récipient(s) (2) peu(ven)t être pliés.

2. Dispositif de refroidissement selon la revendication 1, dans lequel les feuilles (4) sont faites d'aluminium ou d'un alliage de celui-ci.

3. Dispositif de refroidissement selon la revendication 1 ou la revendication 2, dans lequel les feuilles (4) sont soudées ensemble sur leurs bordures périphériques.

4. Dispositif de refroidissement selon l'une quelconque des revendications précédentes, comprenant un ou plusieurs tubes allongés (12), le ou chaque tube (12) communiquant à une extrémité avec la cavité du récipient et avec l'adsorbant qui s'y trouve, pour ainsi créer un passage que le gaz adsorbé traverse lorsqu'il est libéré de l'adsorbant.

5. Dispositif de refroidissement selon la revendication 4, dans lequel le bu chaque tube allongé (12) est substantiellement plus long que la dimension maximale du récipient (2).

6. Dispositif de refroidissement selon l'une quelconque des revendications précédentes, comprenant une ou plusieurs ailettes (33) de conduction thermique s'étendant vers l'extérieur à partir d'au moins une des feuilles.

7. Dispositif de refroidissement selon l'une quelconque des revendications précédentes, comprenant une pluralité de récipients (2) disposés en pile.

8. Dispositif de refroidissement selon la revendication 7, dans lequel chaque récipient (2) est d'une taille et/ou d'une configuration et forme similaires.

9. Dispositif de refroidissement selon l'une quelconque des revendications précédentes, comprenant des moyens de transfert de chaleur (11) en matériau thermiquement conducteur en contact thermique direct avec l'adsorbant (9) et adaptés pour transférer de la chaleur entre les parois du récipient et l'adsorbant (9) qui y est contenu.

10. Dispositif de refroidissement selon la revendication 9, dans lequel l'adsorbant (9) est sous une forme particulaire comprimée.

11. Dispositif de refroidissement selon la revendication 10, dans lequel les moyens (11) de transfert thermique sont sous une forme particulaire, les particules (11) de transfert thermique étant d'une taille moyenne substantiellement différente des particules (9) d'adsorbant.

12. Dispositif de refroidissement selon la revendication 11, dans lequel les particules (11) de transfert thermique sont substantiellement dispersées de manière régulière à travers l'adsorbant (9).

13. Dispositif de refroidissement selon l'une quelconque des revendications précédentes, dans lequel le récipient (2) est adapté à un placement en contact thermique direct avec le fluide à refroidir.

14. Dispositif de refroidissement selon l'une quelconque des revendications précédentes, qui comprend des moyens (42) pour libérer un deuxième gaz dans l'adsorbant, le deuxième gaz étant adsorbé de manière plus préférentielle par l'adsorbant que ne l'est le premier gaz, ceci afin d'accélérer et/ou de parachever la désorption du premier gaz.

15. Dispositif de refroidissement selon la revendication 14, dans lequel le premier et le deuxième gaz et l'adsorbant sont tels que la chaleur spécifique de désorption du premier gaz n'est pas inférieure à la chaleur spécifique d'adsorption du deuxième gaz.

16. Récipient pour fluide contenant un dispositif de refroidissement selon l'une quelconque des revendications précédentes.
